# EUROPÄISCHE PATENTSCHRIFT

(11) **EP 0 976 621 B1**
(45) Veröffentlichungstag und Bekanntmachung des Hinweises auf die Patenterteilung: **29.09.2004**
(21) Anmeldenummer: 99114776.0
(22) Anmeldetag: 28.07.1999
(51) Int. Cl.: B60R 21/13

(54) **Überrollschutz-System für ein Kraftfahrzeug, insbesondere für ein Cabriolet**
Rollover bar system for a vehicle, in particular a convertible
Système d'arceau de sécurité pour un véhicule, un cabriolet en particulier

(30) Priorität: 31.07.1998 DE 19834689
(43) Veröffentlichungstag der Anmeldung: 02.02.2000
(73) Patentinhaber: Bayerische Motoren Werke Aktiengesellschaft, 80788 München (DE)
(72) Erfinder: Premm, Günther, 85591 Vaterstetten (DE); Holthe, Ragnar, 2830 Raufoss (NO); Peter, Dietmar, 71282 Hemmingen (DE)

(56) Entgegenhaltungen:
- EP-A- 0 459 213
- EP-A- 0 729 867
- DE-A- 3 822 461
- DE-A- 4 302 152

## Beschreibung

Die Erfindung bezieht sich auf ein Überrollschutz-System für ein Kraftfahrzeug, insbesondere für ein Cabriolet, nach dem Oberbegriff des Patentanspruches 1.

Bei einem bekannten Überrollschutz-System dieser Art (DE 38 22 461 C2) kann die Kopfstütze durch Verlagern des Überrollbügels in der Höhe verstellt werden. Die Kopfstütze ist in jedem Fall durch die Schenkel des U-förmigen Überrollbügels geführt und gehalten. Sie kann auch durch einen weiteren Antrieb relativ zu dem Bügel in der Höhe verstellt werden. Das bekannte System erfordert einen relativ hohen Steuerungsaufwand, ist bauaufwendig, was sich in den Kosten und im Gewicht auswirkt.

Des weiteren ist aus der DE 43 02 152 A1 ein Überrollschutz-System bekannt, mit einem Überrollbügel, der vom Fahrzeugnutzer willkürlich mit langsamer Geschwindigkeit aus- bzw. eingefahren werden kann.

Der Erfindung liegt die Aufgabe zugrunde, ein Überrollschutz-System der vorausgesetzten Bauart zu schaffen, das mit einfacheren technischen Mitteln ein Verstellen der Kopfstütze aus einer weit abgesenkten Ruhelage in eine für einen guten Schutz geforderte Höhe ermöglicht.

Diese Aufgabe wird erfindungsgemäß durch die im Patentanspruch 1 angegebenen Maßnahmen gelöst.

Weitere vorteilhafte Weiterbildungen sind Gegenstand von Unteransprüchen.

Das Überrollschutz-System gemäß der Erfindung läßt sich gut bei einem System integrieren, das unter Federkraft nach dem sensorgesteuerten Lösen einer Kupplung ausfahrbare und in der ausgefahrenen Lage verrastbare U-förmige Bügel aufweist. Nach Lösen der Verrastung lassen sich die Bügel einfach von Hand wieder zurück in die Ruheposition verschieben, wo sie dann wiederum von der Kupplung niedergehalten werden. Indem man die Kupplung von ihrer niedersten Position nach oben verlagert, wird auch der Überrollbügel um einen entsprechenden Weg nach oben geschoben. Er nimmt dabei die Kopfstütze etwa um den gleichen Weg nach oben mit. Der gesamte Verlagerungsweg kann dabei so gewählt werden, daß in der untersten Position der Kupplung die Kopfstütze mit ihrem oberen Bereich annähernd in Brüstungshöhe des Fahrzeugs liegt, was stilistisch vorteilhaft ist. Die obere Lage der Kupplung kann so gewählt werden, daß die Kopfstütze bis auf die gesetzlich vorgeschriebene Mindesthöhe nach oben verlagert wird. Die in der beschriebenen Weise ausgelöste Verlagerung des Überrollbügels und der Kopfstütze kann beispielsweise durch einen Sitz- oder Gurtkontaktschalter ausgelöst werden.

Erkennt ein Sensor die Gefahr eines Fahrzeugsüberschlags, wird die Kupplung in der üblichen Weise geöffnet und der Energiespeicher, in aller Regel vorgespannte Federn, treibt den Überrollbügel entweder aus der abgesenkten Ruhelage oder aber auch aus der Zwischenposition in die ganz ausgefahrene Stützlage, in der er gegen erneutes Einschieben verrastet wird. Sowohl aus der Zwischenlage als auch aus der ganz ausgefahrenen Position kann der Überrollbügel nach Lösen von Rastelementen wieder in die voll eingefahrene Position von Hand zurückgeschoben werden.

Weitere vorteilhafte Einzelheiten der Erfindung, die auch Gegenstand von Unteransprüchen sind, ergeben sich aus der nachfolgenden Beschreibung mehrerer Ausführungsbeispiele. Es zeigt
- Fig. 1: eine perspektivische Darstellung eines ersten Ausführungsbeispiels eines Überrolischutz-Systems;
- Fig. 2: einen vertikalen Schnitt in Fahrzeuglängsrichtung durch das System nach Fig. 1;
- Fig. 3: eine - teils schematisierte - Ansicht in Richtung des Pfeiles III in Fig. 2;
- Fig. 4: eine der Fig. 3 entsprechende Ansicht eines weiteren Ausführungsbeispiels und
- Fig. 5: eine der Fig. 1 entsprechende Teilansicht eines nochmals abgeänderten Ausführungsbeispiels.

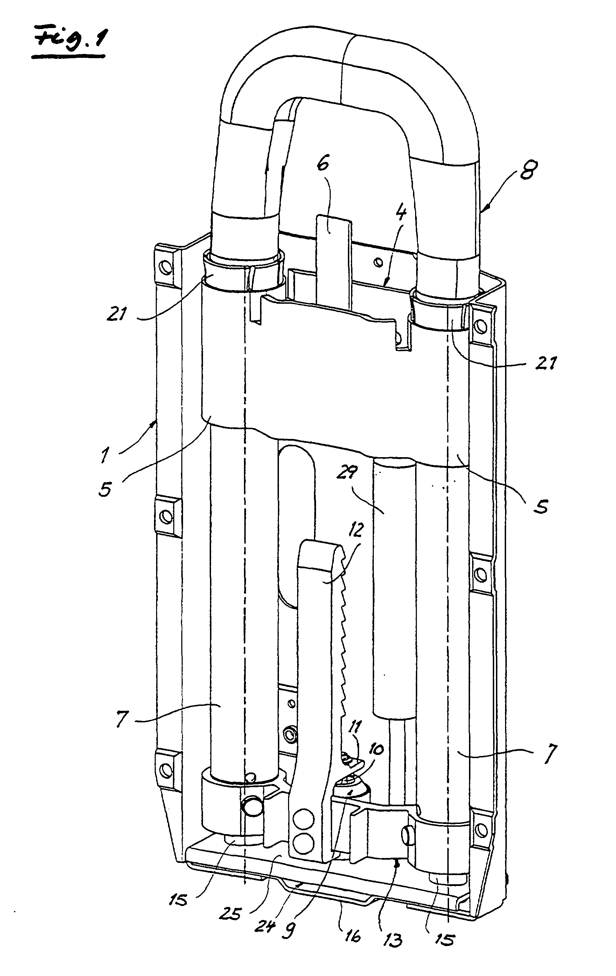

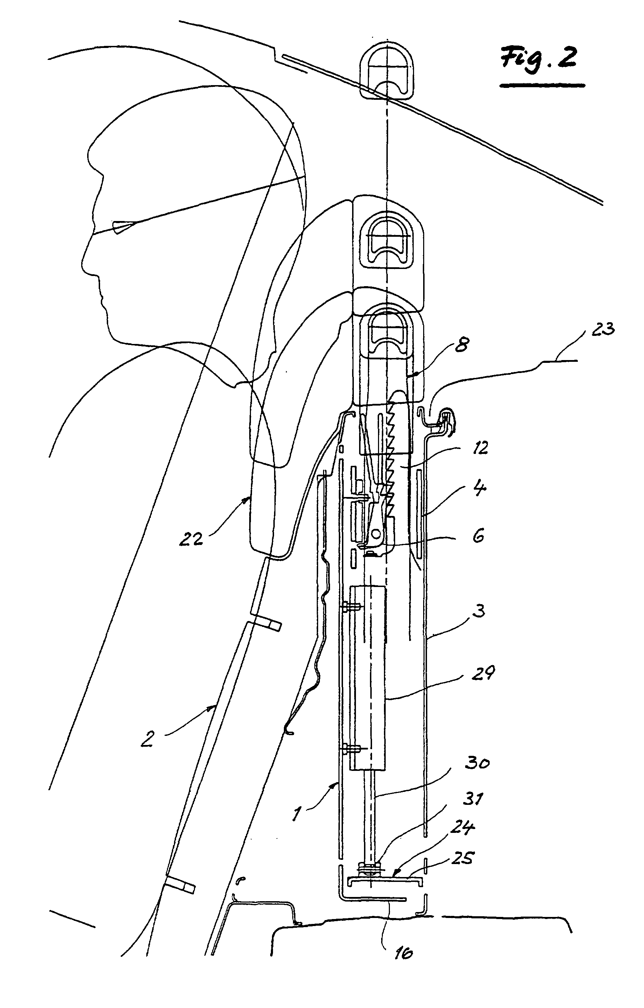

In Fig. 1 der Zeichnung ist das im Querschnitt ein einfaches Hut-Profil aufweisende Gehäuse 1 einer Kassette eines Überrollschutz-Systems dargestellt, das hinter dem in Fig. 2 angedeuteten Fahrzeugsitz 2 mit dem vertikal verlaufenden Abschnitt eines Karosseriebleches 3 verschraubt werden kann. Im oberen Endbereich des Gehäuses ist ein Halteblock 4 befestigt, der zwei seitliche Stützbuchsen 5 umfaßt und eine gegen Federkraft verschwenkbare Sperrklinke 6 lagert. Die Stützbuchsen sind mit geringem radialen Spiel von den beiden vertikalen Schenkeln 7 eines U-förmigen Überrollbügels 8 durchsetzt.

In der abgesenkten Ruhelage (Fig. 1 und 2) ist der Überrollbügel 8 durch eine Kupplung 9 gehalten. Erkennt ein am Fahrzeug angebrachter Sensor die Gefahr eines Fahrzeugüberschlags, wird die Kupplung 9 elektromagnetisch gelöst und ein in Fig. 1 lediglich angedeuteter Haltedorn 10 freigegeben. Der Haltedorn 10 ist mit einem Fortsatz 11 einer gezahnten Rastleiste 12 verbunden, die bei ausgefahrenem Überrollbügel 8 mit der federbelasteten Sperrklinke 6 verrasten kann und den Bügel 8 dann in der ausgeschobenen Position fixiert. Die Rastleiste 12 ist an einem Querjoch 13 befestigt, das die beiden unteren Enden der Schenkel 7 des Bügels 8 verbindet. Nach manuellem Lösen der Sperrklinke 6 kann der Bügel 8 von Hand wieder in die abgesenkte Ruhelage geschoben werden, bis die Kupplung 9 den Bügel 8 in dieser Lage festhält.

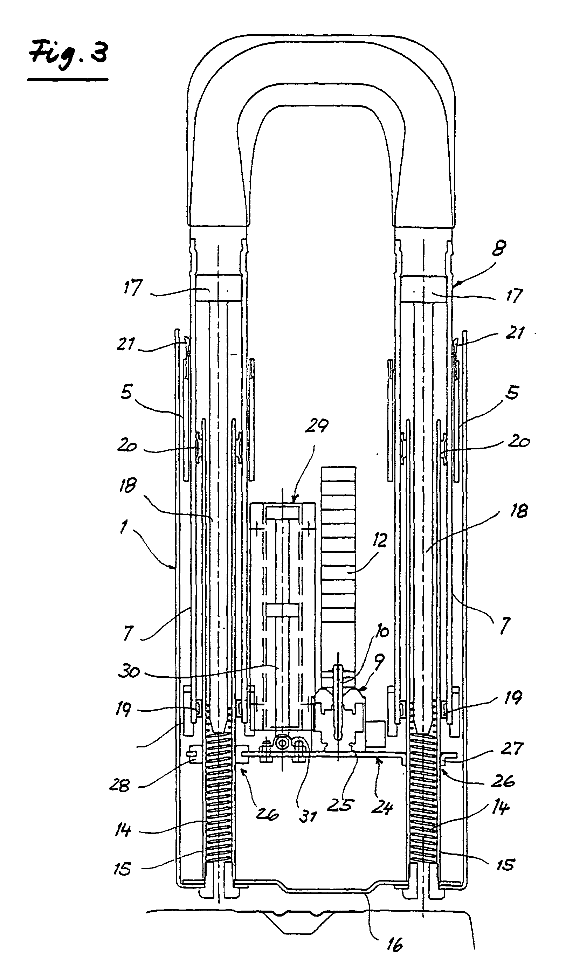

Bei den dargestellten Ausführungsbeispielen sind als Kraftspeicher, die nach Lösen der Kupplung 9 den Bügel 8 in seine ausgefahrene Stützposition bewegen, Schrauben-Druckfedern 14 vorgesehen, die in Fig. 3 angedeutet sind und sich im Inneren von Standrohren 15 befinden. Die Standrohre 15 sind am Kassettenboden 16 befestigt, können gegenüber dem Kassettenboden 16 geringfügig pendeln und dienen unter anderem zur Führung der Schenkel 7 des Bügels 8 während des Ausfahrens bzw. des Einschiebens. Im Inneren der Schenkel sind schließlich noch mit einem erweiterten oberen Bund 17 Führungsdorne 18 befestigt. Die Schrauben-Druckfedern 14 stützen sich einerseits am unteren Ende der Standrohre 15 und andererseits an dem schon erwähnten Bund 17 der Führungsdorne 18 ab. Ein elastischer Gleitring 19 am inneren Umfang des unteren Endes jedes Schenkels 7 ist längs der Standrohre 15 verlagerbar, während eine weitere Gleitbuchse 20 außen am oberen Ende eines jeden Standrohres 15 befestigt ist. Eine elastische Ring-Manschette 21 verschließt den zwischen dem Innenumfang jeder Stützbuchse und den Schenkeln 7 vorhandenen schmalen Ringspalt.

Die Kupplung 9 ist um einen bestimmten Weg in Verschieberichtung des Überrollbügels 8 in der Höhe verstellbar. Der Verstellweg der Kupplung 9 entspricht dabei dem maximalen Verlagerungsweg der Kopfstütze 22 zwischen ihrer untersten Lage, in der sie kaum über die Fahrzeugbrüstung 23 nach oben übersteht, und einer maximalen Höhe, wie sie zur Erfüllung einer möglichst hohen Schutzwirkung auch für große Personen erforderlich ist.

Die den Überrollbügel 8 im Crash-Fall freigebende Kupplung 9 kann an einem entlang den Führungselementen, also den Standrohren 15 des Überrollbügels 8 verschiebbaren Querelement 24 angeordnet sein. Das Querelement 24 kann als eine wie ein in der Höhe beweglicher Zwischenboden fungierende horizontale Stützplatte 25 ausgebildet sein, die an ihren Endbereichen Bohrungen aufweist, die zur Führung der Stützplatte 25 von den der Führung des Überrollbügels 8 dienenden Standrohren 15 durchsetzt sind. Hierzu kann (Fig. 3, rechts) die Stützplatte 25 an der Führungsbohrung 26 einen an den Standrohren 15 anliegenden abgebogenen Kragen 27 aufweisen. Alternativ ist auch (Fig. 3, links) das Anbringen einer geeigneten Gleitbuchse 28 an der Führungsbohrung der Stützplatte 25 möglich.

Bei dem Ausführungsbeispiel nach den Fig. 1 bis 3 ist das Querelement 24 bzw. die Stützplatte 25 über einen Hydraulik-Zylinder 29 in der Höhe verstellbar, der ein doppelt wirkender Zylinder sein kann. Der Hydraulik-Zylinder 29 wird zweckmäßig von dem Hydraulik-System versorgt, das auch den Antrieb des Cabrio-Verdecks bewirkt. Die Steuerung des Hydraulik-Zylinders kann dabei so erfolgen, daß ein Sitzund/oder Gurtkontaktschalter die Verlagerung des Überrollbügels 8 und damit der Kopfstütze 22 bewirkt. Dabei kann auch vorgegeben werden, daß die Kopfstütze 22 über den oder die Schalter in die Höhe verlagert werden, die durch gesetzliche Bestimmungen als Mindesthöhe vorgeschrieben ist. Selbstverständlich kann die Kopfstütze auch vom Sitzbenutzer - im Rahmen des möglichen Verstellweges - in die jeweils von ihm individuell gewünschte Höhe verlagert werden.

Bei Vorliegen eines Crash-Signals wird die Kupplung 9 getrennt, gleichgültig in welcher Höhe sich die Stützplatte 25 und damit die Kupplung 9 befindet. Der Überrollbügel 8 wird dann durch die Schrauben-Druckfedern 14 in die voll ausgefahrene Lage geschoben, in der die mit dem Überrollbügel 8 verbundene Rastleiste 12 mit der Sperrklinke 6 in Eingriff kommt.

Die Kopfstütze 22 kann mit verhältnismäßig langen Tragstangen gegenüber dem Gehäuse 1 verschiebbar sein. Über geeignete Rastverbindungen sind die unteren Enden der Tragstangen der Kopfstütze 22 mit der Stützplatte 25 verbunden, so daß beim Verlagern der Stützplatte nach oben und auch nach unten die Kopfstütze 22 jeweils mitgenommen wird.

Im Crash-Fall verbleibt die Kopfstütze 22 in der zuvor gewählten Höhe. Der Überrollbügel tritt dann nach Aufschwenken bzw. Aufreißen einer im hinteren Bereich der Kopfstütze 22 vorgesehenen oberen Klappe über die Kopfstütze 22 nach oben heraus, wie es beispielsweise in der früheren Patentanmeldung 196 50 593 beschrieben ist.

Nach manuellem Lösen der Sperrklinke 6 kann der Überrollbügel von Hand wieder so weit eingeschoben werden, bis er von der Kupplung 9 gehalten wird.

Wie man insbesondere in Fig. 2 erkennt, ist der Hydraulik-Zylinder 29 mit seinem Zylinder-Teil durch Schrauben am Gehäuse 1 befestigt, während das freie Ende der Kolbenstange 30 über einen Lagerbock 31 mit der Stützplatte 25 verbunden ist.

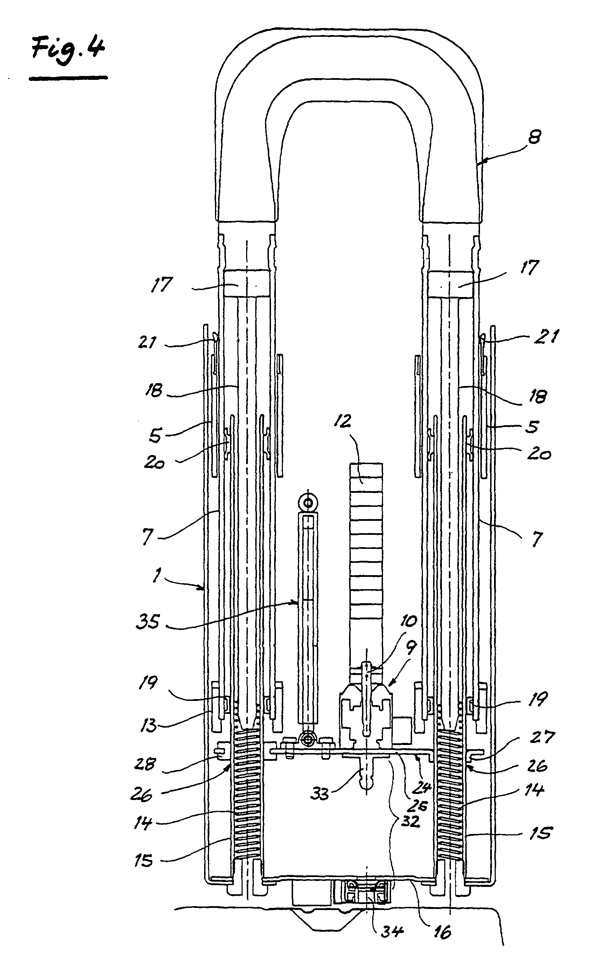

Bei dem Ausführungsbeispiel nach der Fig. 4 ist die Stützplatte 25 über ein lösbares Schloß 32 mit einem fahrzeugaufbaufesten Teil, hier mit dem Kassettenboden 16, verbunden. Das Schloß 32 umfaßt im wesentlichen einen über eine geeignete Befestigungsplatte mit der Stützplatte 25 verbundenen Haltezapfen 33, sowie eine Zapfenaufnahme 34. In der tiefsten Lage der Kopfstütze 22 greift der Haltezapfen 33 in die Zapfenaufnahme 34 ein und wird dort verriegelt. Nach Lösen der Verriegelung, was durch eine schon im Zusammenhang mit dem Hydraulik-Zylinder 29 beschriebene Steuerung erfolgen kann, verlagern die Schrauben-Druckfedern 14 den Überrollbügel 8 und die mit ihm noch verbundene geschlossene Kupplung 9 bis zu einem geeigneten Anschlag nach oben. Der Anschlag legt dabei auch den maximalen Verlagerungsweg der Kopfstütze 22 fest. Dies kann beispielsweise die Strecke sein, über die die Kopfstütze 22 aus ihrer maximal abgesenkten Lage in ihre gesetzlich vorgeschriebene Höhe verlagert werden muß.

Damit nach Öffnen des Schlosses 32 die Kopfstütze 22 und der mit ihr transportierte Überrollbügel 8 nicht zu abrupt in die durch den erwähnten Anschlag bestimmte Höhenlage verlagert wird, ist ein Dämpfungselement 35 einerseits an der Stützplatte 25 und andererseits an der Kassette 1 befestigt. Der schon erwähnte Anschlag zur Begrenzung der maximalen Höhenverlagerung der Stützplatte 25 kann dabei durch einen in das Dämpfungselement 35 integrierten Endanschlag gebildet sein.

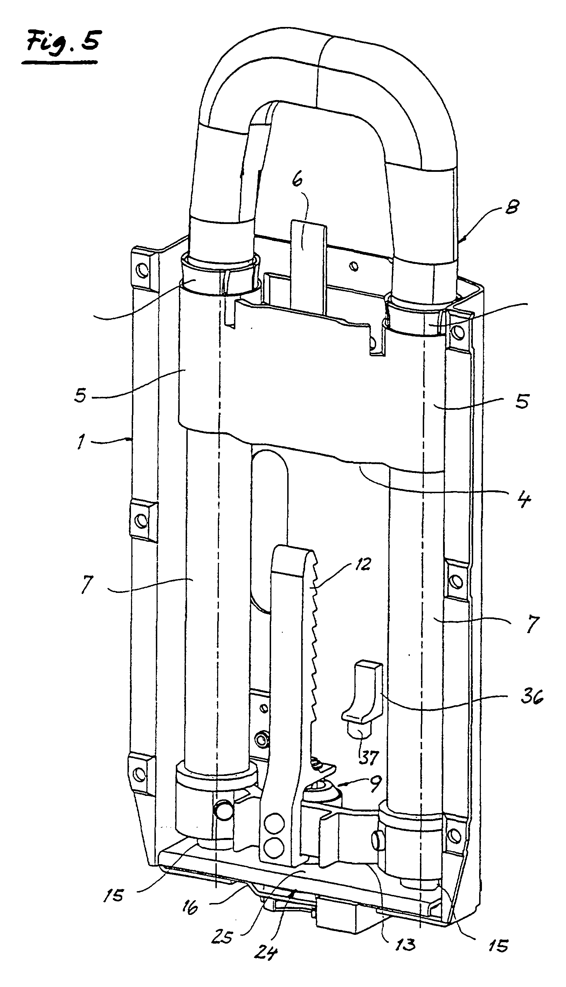

In der Ausschnittdarstellung nach Fig. 5 ist ein nochmals abgeändertes Ausführungsbeispiel wiedergegeben, bei dem das Dämpfungselement ein an der Kassette befestigter eigener Anschlag 36 mit einem nach unten gerichteten elastischen Puffer 37 sein kann. Nach Lösen eines dem Schloß 32 der Fig. 4 entsprechenden Schlosses kommt die Stützplatte 25 vom Kassettenboden 16 frei und die (nicht dargestellten) Druckfedern 14 verlagern den Überrollbügel 8 und in der gleichen Weise die Kupplung 9 so lange nach oben, bis das unten die beiden Schenkel 7 des Überrollbügels 8 verbindende Querjoch 13 auf den elastischen Puffer 37 trifft. In dieser Höhe des Überrollbügels 8 erreicht die Kopfstütze 22 dann wiederum ihre maximale Höhenlage, die unter Umständen der gesetzlich vorgeschriebenen Höhe entspricht.

## Patentansprüche

1. Überrollschutz-System für ein Kraftfahrzeug, insbesondere für ein Cabriolet, mit einem hinter einem Fahrzeugsitz (2) angeordneten und aus einer abgesenkten Ruhelage nach sensorgesteuertem Lösen einer Kupplung (9) durch einen Kraftspeicher nach oben ausfahrbaren U-förmigen Überrollbügel (8), mit dem eine dem Fahrzeugsitz (2) zugeordnete Kopfstütze (22) in der Höhe verstellbar ist,
**dadurch gekennzeichnet, daß** die Kupplung (9) über einen dem Verstellweg der Kopfstütze (22) entsprechenden Weg in Verschieberichtung des Überrollbügels (8) verlagerbar ist, wobei die Kupplung (9) an einem entlang den Führungselementen (15) des Überrollbügels (8) verschiebbaren Querelement (24) angeordnet und die Kopfstütze (22) mit dem verschiebbaren Querelement (24) verbunden ist.

2. System nach Anspruch 1,
**dadurch gekennzeichnet, daß** das Querelement (24) eine horizontale Stützplatte (25) ist, die an ihren Endbereichen Bohrungen (26) aufweist, die zur Führung der Stützplatte (25) von der Führung des Überrollbügels (8) dienenden Standrohren (15) durchsetzt sind.

3. System nach Anspruch 2,
**dadurch gekennzeichnet, daß** die Stützplatte (25) an der Führungsbohrung (26) einen an den Standrohren (15) anliegenden abgebogenen Kragen (27) hat.

4. System nach Anspruch 2,
**dadurch gekennzeichnet, daß** die Stützplatte (25) an der Führungsbohrung (26) eine Gleitbuchse (28) aufweist.

5. System nach Anspruch 1,
**dadurch gekennzeichnet, daß** das Querelement (24) über einen Hydraulik-Zylinder (29) in der Höhe verstellbar ist.

6. System nach Anspruch 5,
**dadurch gekennzeichnet, daß** der Hydraulik-Zylinder (29) ein doppelt wirkender Zylinder ist.

7. System nach Anspruch 2,
**dadurch gekennzeichnet, daß** die Stützplatte (25) über ein lösbares Schloß (32) an einem fahrzeugaufbaufesten Teil fixierbar ist.

8. System nach Anspruch 7,
**dadurch gekennzeichnet, daß** das Schloß (32) am Boden (16) einer die Führungselemente des Überrollbügels (8) aufnehmenden und am Fahrzeugaufbau befestigbaren Kassette (1) angeordnet ist.

9. System nach Anspruch 8,
**dadurch gekennzeichnet, daß** ein einerseits an der Stützplatte (25), andererseits an der Kassette (1) befestigbares Dämpfungselement (35) vorgesehen ist.

10. System nach Anspruch 9,
**dadurch gekennzeichnet, daß** in das Dämpfungselement (35) ein Endanschlag integriert ist, der bei maximal ausgefahrener Kopfstütze wirksam ist.

11. System nach Anspruch 9,
**dadurch gekennzeichnet, daß** das Dämpfungselement (35) ein TeleskopZylinder ist.

12. System nach Anspruch 9,
**dadurch gekennzeichnet, daß** das Dämpfungselement ein an der Kassette befestigter Anschlag (36) mit einem elastischen Puffer (37) ist.

13. System nach Anspruch 1,
**dadurch gekennzeichnet, daß** die Kopfstütze (22) wenigstens bis in die gesetzlich geforderte Mindesthöhe nach oben verlagerbar ist.

## Claims

1. Roll-over protection system for a motor vehicle, especially for a cabriolet, comprising a U-shaped roll bar (8) which is arranged behind a vehicle seat (2) and can be extended upwardly from a lowered rest position after sensor-controlled release of a coupling (9) by an energy accumulator and with which a head restraint (22) associated with the vehicle seat (2) can be adjusted with respect to height,
**characterised in that** the coupling (9) can be displaced over a distance corresponding to the adjustment distance of the head restraint (2) in the displacement direction of the roll bar (8), the coupling (9) being arranged on a transverse element (24) which can be displaced along the guide elements (15) of the roll bar (8) and the head restraint (22) is connected to the displaceable transverse element (24).

2. System according to claim 1,
**characterised in that** the transverse element (24) is a horizontal support plate (25) which at its end regions has holes (26) which are penetrated by vertical tubes (15) serving to guide the roll bar (8) to guide the support plate (25).

3. System according to claim 2,
**characterised in that** the support plate (25) has a bent collar (27) resting on the vertical tubes (15) at the guide hole (26).

4. System according to claim 2,
**characterised in that** the support plate (25) has a sliding bush (28) at the guide hole (26).

5. System according to claim 1,
**characterised in that** the transverse element (24) can be adjusted with respect to height via a hydraulic cylinder (29).

6. System according to claim 5,
**characterised in that** the hydraulic cylinder (29) is a dual-acting cylinder.

7. System according to claim 2,
**characterised in that** the support plate (25) can be fixed via a releasable lock (32) to a part rigidly fixed to the vehicle body.

8. System according to claim 7,
**characterised in that** the lock (32) is arranged at the base (16) of a case (1) which receives the guide elements of the roll bar (8) and can be fixed to the vehicle body.

9. System according to claim 8,
**characterised in that** a damping element (35) which can be fixed, on the one hand, to the support plate (25), and on the other hand, to the case (1) is provided.

10. System according to claim 9,
**characterised in that** an end stop which is effective when the head restraint is extended to the maximum is integrated into the damping element (35).

11. System according to claim 9,
**characterised in that** the damping element (35) is a telescopic cylinder.

12. System according to claim 9,
**characterised in that** the damping element is a stop (36) with an elastics material buffer (37) fastened to the case.

13. System according to claim 1,
**characterised in that** the head restraint (22) can be upwardly displaced at least up to the legally required minimum height.

## Revendications

1. Système de protection au retournement pour un véhicule automobile, en particulier pour un cabriolet, comprenant un arceau de sécurité (8) en forme de U disposé derrière un siège de véhicule (2) et qui peut être mis en extension vers le haut par un accumulateur de force, en partant d'une position de repos abaissée après le déblocage commandé par capteur d'un accouplement (9), arceau avec lequel un appuie-tête (22) associé au siège de véhicule (2) peut être déplacé en hauteur,
**caractérisé en ce que**
l'accouplement (9) peut être déplacé dans la direction de translation de l'arceau de sécurité (8), sur une course qui correspond à la course de déplacement de l'appuie-tête (22), l'accouplement (9) étant disposé sur un élément transversal (24) qui peut coulisser le long des éléments de guidage (15) de l'arceau de sécurité (8) et l'appuie-tête (22) étant relié à l'élément transversal (24) mobile en translation.

2. Système selon la revendication 1,
**caractérisé en ce que**
l'élément transversal (24) est une plaque d'appui horizontale (25) qui présente dans ses régions terminales des perçages (26) qui, pour assurer le guidage de la plaque d'appui (25), sont traversés par des tubes sensiblement verticaux (15) qui servent au guidage de l'arceau de sécurité (8).

3. Système selon la revendication 2,
**caractérisé en ce que**
la plaque d'appui (25) présente, au droit du perçage de guidage (26), un collet (27) replié qui est en appui contre les tubes sensiblement verticaux (15).

4. Système selon la revendication 2,
**caractérisé en ce que**
la plaque d'appui (25) présente une douille de glissement (28) au niveau du perçage de guidage (26).

5. Système selon la revendication 1,
**caractérisé en ce que**
l'élément transversal (24) peut être déplacé en hauteur au moyen d'un vérin hydraulique (29).

6. Système selon la revendication 5,
**caractérisé en ce que**
le vérin hydraulique (29) est un vérin à double effet.

7. Système selon la revendication 2,
**caractérisé en ce que**
la plaque d'appui (25) peut être fixée à une partie solidaire de la structure du véhicule au moyen d'une serrure (32) pouvant être débloquée.

8. Système selon la revendication 7,
**caractérisé en ce que**
la serrure (32) est disposée au fond (16) d'une cassette (1) qui reçoit les éléments de guidage de l'arceau de sécurité (8) et qui peut être fixée à la structure du véhicule.

9. Système selon la revendication 8,
**caractérisé en ce que**
un élément amortisseur (35) peut être fixé, d'une part, à la plaque d'appui (25) et, d'autre part, à la cassette (1).

10. Système selon la revendication 9,
**caractérisé en ce que**
une butée terminale qui entre en jeu lorsque l'appuie-tête est mis en extension au maximum est intégrée dans l'élément amortisseur (35).

11. Système selon la revendication 9,
**caractérisé en ce que**
l'élément amortisseur (35) est un cylindre télescopique.

12. Système selon la revendication 9,
**caractérisé en ce que**
l'élément amortisseur est une butée (36) fixée à la cassette et munie d'un tampon élastique (37).

13. Système selon la revendication 1,
**caractérisé en ce que**
l'appuie-tête (22) peut être déplacé vers le haut au moins jusqu'à la hauteur minimale exigée par la loi.
